# EUROPEAN PATENT APPLICATION

(11) **EP 3 693 897 A1**
(43) Date of publication of application: **12.08.2020**
(21) Application number: 20155583.6
(22) Date of filing: 05.02.2020
(51) Int. Cl.: G06Q 10/00

(54) **DEPOSIT FACILITATION PROCESS AND SYSTEM**

(30) Priority: 05.02.2019 US 201916268394
(71) Applicant: Seddik, Mohamed, Belle River, Ontario N0R 1A0 (CA)
(72) Inventor: Seddik, Mohamed, Belle River, Ontario N0R 1A0 (CA)
(74) Representative: Kratz, Robert

(57) **Abstract**

A deposit facilitation system that is operable to receive, retain and subsequently distribute a deposit wherein the deposit is for a good or service to be delivered by one of two entities engaged in a transaction. The present invention utilizes a software application configured to operate on computing devices wherein the software application facilitates a transaction between a first entity and a second entity. A deposit for a good or service is submitted to the operator of the present invention by the first entity along with transaction details. The operator of the present invention notifies the second entity of receipt of the deposit. The second entity provides delivery of the good or service and send confirmation thereof to the operator. The operator confirms delivery of the good or service and transfers the deposit to the second entity. A fee is collected by the operator of the system.

## Description

### FIELD OF THE INVENTION

The present invention relates generally to third party verification processes, more specifically but not by way of limitation, a software application that is operable to receive, retain and distribute a portion of an amount of currency wherein the amount was in exchange for a good or service.

### BACKGROUND

When two entities enter into an agreement, whether verbal or written, there is often an agreed upon dollar amount to be exchanged for a good or service. By way of example but not limitation, if a photographer is hired to photograph a wedding there will be an agreed upon fee between the photographer and the hiring party. In exchange for the fee, the photographer will capture and deliver agreed upon photographs. As can often be the scenario, many times the hired entity may not deliver the agreed upon service and/or good. In the aforementioned example, the photographer may not capture the required photographs or may fail to appear at the event. In many cases fees are exchanged prior to the delivery of the good and/or service.

When a fee has been transferred prior to the delivery of good and/or service, the buyer has incurred a certain amount of risk. After the fee has been transferred and the good and/or service was not delivered or there was another issue it is difficult for the purchaser to resolve the matter and collect a return of the fee if applicable. While most credit card companies offer purchaser protection and can intervene in some matters, this requires the utilization of a credit card for the transaction and this may not be desirable or possible.

Accordingly, there is a need for a deposit facilitation process and software that is configured to receive, retain and distribute a deposit for a good and/or service between a first entity and a second entity.

### SUMMARY OF THE INVENTION

It is the object of the present invention to provide a software application configured to facilitate a process intermediate a first entity and a second entity wherein the software is configured to receive and retain a deposit for a good and/or service being exchanged between the first entity and the second entity.

Another object of the present invention is to provide a deposit securing process facilitated by the software application of the present invention wherein the first entity and second entity must be registered users of the software application of the present invention.

A further object of the present invention is to provide a software application configured to facilitate a financial transaction intermediate a first entity and a second entity wherein a user must create an account in the software of the present invention and provide a payment technique such as but not limited to a credit card.

Still another object of the present invention is to provide a deposit securing process facilitated by the software application of the present invention wherein the process further includes receipt and retention of a deposit wherein the deposit is identified for a specific exchange of a good and/or service.

An additional object of the present invention is to provide a software application configured to facilitate a financial transaction intermediate a first entity and a second entity wherein the operator of the present invention will retain the deposit of the paying entity until the paying entity provides notification authorizing release thereof.

Yet a further object of the present invention is to provide a deposit securing process facilitated by the software application of the present invention wherein the operator of the present invention collects a transaction fee for deposit management between the first and second entities.

Another object of the present invention is to provide a software application configured to facilitate a financial transaction intermediate a first entity and a second entity wherein the software of the present invention includes a reporting feature that provides all users thereof various transaction reports.

Still another object of the present invention is to provide a deposit securing process facilitated by the software application of the present invention wherein the operator of the present invention will engage in dispute resolution upon occurrence between the first and second entity and subsequently distribute the deposit to the correct entity.

To the accomplishment of the above and related objects the present invention may be embodied in the form illustrated in the accompanying drawings. Attention is called to the fact that the drawings are illustrative only. Variations are contemplated as being a part of the present invention, limited only by the scope of the claims.

### BRIEF DESCRIPTION OF THE DRAWINGS

A more complete understanding of the present invention may be had by reference to the following Detailed Description and appended claims when taken in conjunction with the accompanying Drawings wherein:
Figure 1 is a flowchart of an exemplary process for user registration; and
Figure 2 is a flowchart of an exemplary process for setting management of the present invention; and
Figure 3 is a flowchart of an exemplary process of operator administration of the present invention; and
Figure 4 is a flowchart of an exemplary process of a financial transaction between a first entity and a second entity utilizing the present invention.

### DETAILED DESCRIPTION

Referring now to the drawings submitted herewith, wherein various elements depicted therein are not necessarily drawn to scale and wherein through the views and figures like elements are referenced with identical reference numerals, there is illustrated a deposit facilitation system 100 constructed according to the principles of the present invention.

An embodiment of the present invention is discussed herein with reference to the figures submitted herewith. Those skilled in the art will understand that the detailed description herein with respect to these figures is for explanatory purposes and that it is contemplated within the scope of the present invention that alternative embodiments are plausible. By way of example but not by way of limitation, those having skill in the art in light of the present teachings of the present invention will recognize a plurality of alternate and suitable approaches dependent upon the needs of the particular application to implement the functionality of any given detail described herein, beyond that of the particular implementation choices in the embodiment described herein. Various modifications and embodiments are within the scope of the present invention.

It is to be further understood that the present invention is not limited to the particular methodology, materials, uses and applications described herein, as these may vary. Furthermore, it is also to be understood that the terminology used herein is used for the purpose of describing particular embodiments only, and is not intended to limit the scope of the present invention. It must be noted that as used herein and in the claims, the singular forms "a", "an" and "the" include the plural reference unless the context clearly dictates otherwise. Thus, for example, a reference to "an element" is a reference to one or more elements and includes equivalents thereof known to those skilled in the art. All conjunctions used are to be understood in the most inclusive sense possible. Thus, the word "or" should be understood as having the definition of a logical "or" rather than that of a logical "exclusive or" unless the context clearly necessitates otherwise. Structures described herein are to be understood also to refer to functional equivalents of such structures. Language that may be construed to express approximation should be so understood unless the context clearly dictates otherwise.

References to "one embodiment", "an embodiment", "exemplary embodiments", and the like may indicate that the embodiment(s) of the invention so described may include a particular feature, structure or characteristic, but not every embodiment necessarily includes the particular feature, structure or characteristic.

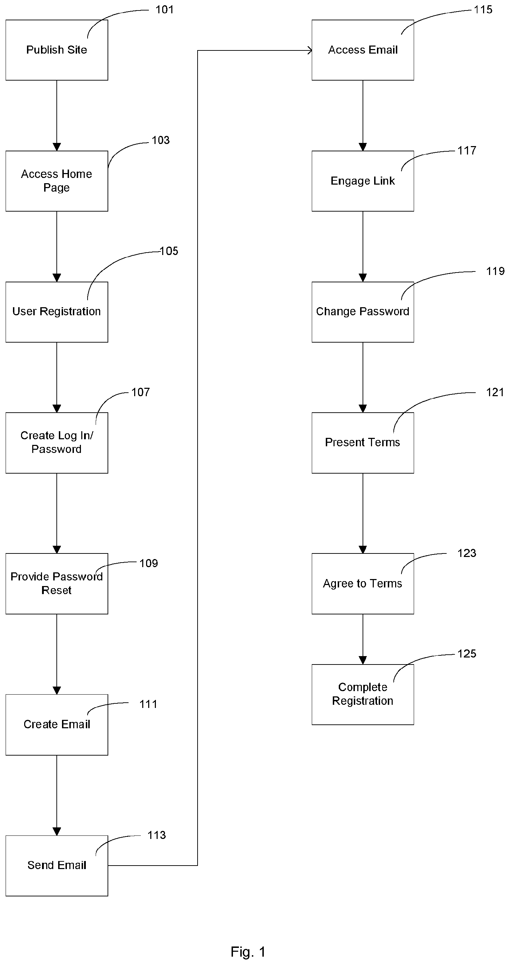

Referring in particular to Figure 1, the login and account creation process is outlined therein. In step 101, the operator of the deposit facilitation system 100 will publish a website wherein the website is a conventional website providing a graphical interface configured to provide engagement of the functionality of the deposit facilitation system 100. Step 103, a user will access the home page of the website of the present invention. In step 105, the user will initiate the user/account registration process in order to establish an account within the deposit facilitation system 100. It should be further understood within the scope of the present invention that the account registration could occur at a corporate level wherein a main account is registered to a corporation and additional individual accounts would be registered underneath the main account. By way of example but not limitation, a main account having individual accounts associated therewith could be utilized for sales teams as a tool for performance tracking. Step 107, if a user is new to the present invention, an entry field will be provided to create a login name and a password. In step 109, if a user is an existing user and is unable to access their account due to forgetting a password, an option is provided to that user for the ability to reset the password associated with their existing account. Step 111, the deposit facilitation system 100 will create an email with a timed hyperlink to a user that has requested reset of their password. In step 113, the email with the timed hyperlink for password reset is sent to the user. Step 115, the user will access the password rest email. Step 117, the user will engage the hyperlink wherein the user is directed to a website that facilitates the entry and recording of a new password for the user's account. In step 119, the user will change their password. In step 121, the present invention will present a copy of the terms and conditions to the user. It should be understood within the scope of the invention that a new user will be present the terms and conditions after step 107 and that steps 109 through 119 are distinct to a user that requested a password reset. In step 123, the user will agree to the terms and conditions. Step 125, account registration is completed by the software of the present invention. It should be understood within the scope of the present invention that account registration for the deposit facilitation system 100 could include collection of personal data such as but not limited to email address, physical address and payment information such as but not limited to a credit card or bank account information.

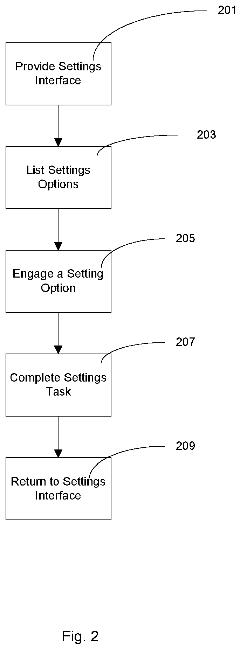

Now referring in particular to Figure 2 herein, the account settings interface and process of the present invention is diagrammed therein. In step 201, the software of the present invention provides a graphical interface for the settings of a user's account. In step 203, a user will be presented a parameter list of setting for their account ensuing access to the settings webpage and/or interface of the software application of the present invention. It is contemplated within the scope of the present invention that numerous settings parameters could be provided to the user in step 203. By way of example but not limitation, the settings parameters provided to a user could include but are not limited to profile edit, payment settings, rating, contact operator, feedback, privacy policy and general information inquiry. Those skilled in the art that the aforementioned could be utilized by a user of the deposit facilitation system 100 to execute desired transactions. By way of example but not limitation, a user will engage the payment settings parameter in order to update payment information associated with the account. Further, a user could engage the feedback parameter to provide feedback on either another user or a particular transaction that is either pending or completed. Step 205, the user engages the necessary settings parameters as discussed herein. In step 207, the user completes at least one task through engagement of the settings parameters provided by the software of the present invention. Step 209, the user will either exit the settings interface or execute a task utilizing another settings parameters.

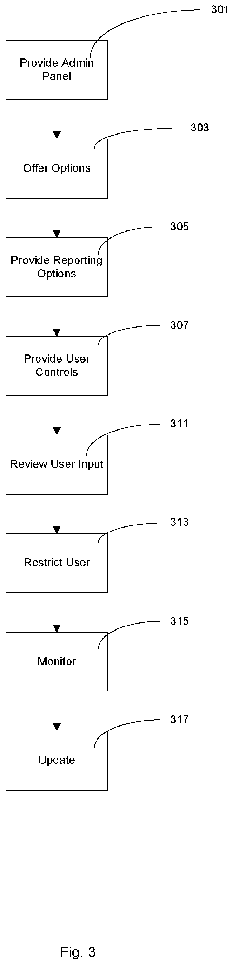

Figure 3 submitted as a part hereof, outlines the administration of the software of the present invention by an operator thereof. In step 301, an administration graphical interface is provided to the operator of the present invention. The administration interface provides an operator of the deposit facilitation system 100 to execute certain tasks such as but not limited to reporting. It should be understood within the scope of the present invention that the administration interface could facilitate numerous tasks and is not limited to the specific options discussed herein for exemplary purposes. In step 303, the operator is provided with parameters for executing various administration tasks. These parameter include but a not limited to reports, user information and banned user reports. Step 305, the software of the present invention provides a reporting option to the operator of the present invention. Step 307, an operator can access user controls wherein information about a user is reported to the operator and can include but is not limited to transaction summaries. In step 311, the operator will review user inputted data wherein the user inputted data has been entered into the software of the deposit facilitation system 100 by a user and pertains to a transaction engaged in by a user. Step 313, ensuing review of the user inputted data concerning a user involved in a transaction that potentially has a dispute or alternate issue relating to a specific user, the operator can restrict the user from utilizing the present invention. In step 315, the operator of the deposit facilitation system 100 will monitor for user inputted data and take action thereon as needed. Step 317, the operator will update user status such as but not limited to reinstatement upon review of additional data or other information.

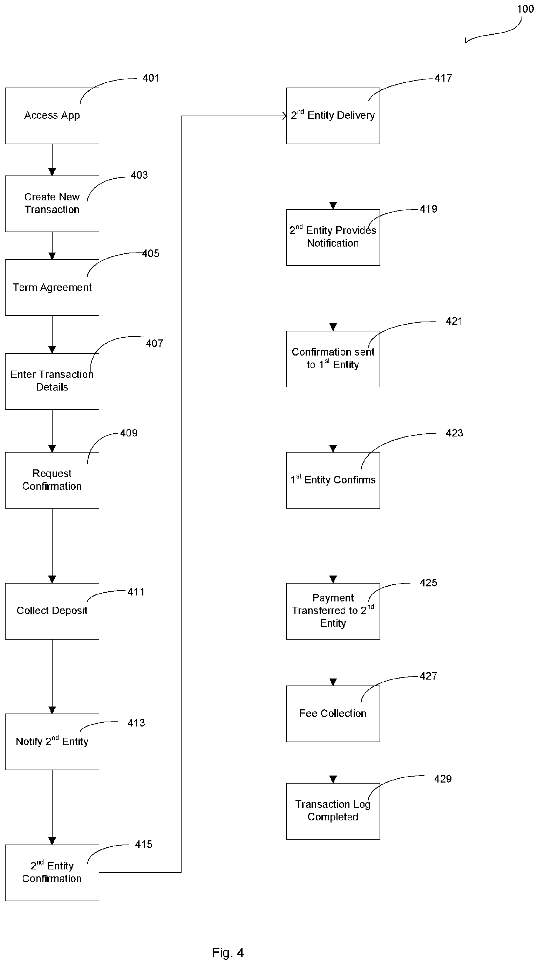

Now referring in particular to Figure 4 herein, an exemplary process intermediate a first entity and a second entity is outlined therein. It should be understood within the scope of the present invention that the term entity is utilized as the present invention could facilitate transactions between individuals as well as organizations. In step 401, the first entity will access the software application of the present invention utilizing a computing device such as but not limited to a smart phone. If the first entity is not a registered user the first entity will register with the deposit facilitation system 100 as previously described herein. If the first entity is already registered, the first entity will enter their account credentials and proceed with accessing the software application of the deposit facilitation system 100. In step 403, the first entity will utilize the features provided by the present invention to create a new transaction wherein the transaction will be between the first entity and a second entity. It should be understood within the scope of the present invention that the deposit facilitation system 100 could assign a PIN number to either an entity or a transaction for the purpose of identification of either the aforementioned. In step 405, the first entity will be provided with the terms and conditions of utilizing the present invention and will agree thereto in order to proceed. Step 407, the first entity will enter into the appropriate provided data fields details about the transaction for which the first entity desires to utilize the deposit facilitation system 100. It should be understood that the transaction details can include but are not limited to second entity, contact information, good or service information and timeline.

Ensuing entry of the transaction details, the software of the present invention requests confirmation of the transaction wherein the first entity is provided with the transaction details and is required to confirm. In step 411, ensuing confirmation of the transaction, the deposit facilitation system 100 facilitates collection of the deposit for the transaction. It should be understood within the scope of the present invention that either the first entity or the second entity could initiate a transaction, i.e. the buyer could initiate a transaction and request a deposit from a seller or a seller could initiate a transaction and request a deposit from a buyer. The deposit is collected by the operator of the present invention and is transferred utilizing the payment method associated with the account of the first entity. Step 413, the software of the present invention sends a notification to the second entity that is a party to the transaction with the first entity. It should be understood that the notification could be delivered via SMS text message, email or other suitable electronic techniques. It is further contemplated within the scope of the present invention that the first entity and the second entity could communicate utilizing a messaging feature that is integrated into the application. It is further contemplated within the scope of the present invention that the application of the present invention include the ability to transfer documents, picture or similar items in order to provide contract documentation, delivery progress or other items. In step 415, the second entity receives the notification and provides confirmation of the transaction with the first entity. Step 417, the second entity delivers either the good or service that is material to the transaction between the first entity and the second entity. In step 419, ensuing completion of the delivery of good or service, the second entity enters confirmation of completion in the deposit facilitation system 100 so as to initiate notification within the present invention of the transaction completion. In step 421, the deposit facilitation system 100 sends a confirmation request to the first entity requesting that the first entity respond with confirmation that the good or service from the second entity has been successfully delivered. Step 423, the first entity enters confirmation within the deposit facilitation system 100 that the second entity has successfully delivered the good or service. Step 425, the deposit facilitation system 100 executes payment transfer of the deposit to the second entity. In step 427, the operator of the deposit facilitation system 100 collects a fee for the transaction wherein the fee is a flat rate and is deducted from the deposit transferred to the second entity. It should be understood within the scope of the present invention that the fee collection could be divided such that a portion of the fee collected comes from the first entity and another portion of the fee is collected from the second entity. In step 429, the transaction between the first entity and second entity is marked completed in the deposit facilitation system 100 and a record thereof may be stored in the database of the present invention. It should be understood within the scope of the present invention that at least one computer database is utilized to provide operation of the deposit facilitation system 100. The computer database of the present invention is a conventional computing device having the necessary electronics to store, receive, transmit and manipulate data.

While the immediate foregoing provides a review of a successful transaction intermediate a first entity and a second entity, it is within the scope of the present invention to provide remediation of a transaction wherein a dispute is associated therewith. If either the first entity or second entity is dissatisfied with the transaction, a report can be filed with the operator of the deposit facilitation system 100. The operator is responsible for investigating the details of the transaction and subsequent a diligent investigation will either complete the deposit transfer to the second entity or return the deposit to the first entity. The operator of the deposit facilitation system 100 maintains rights to implement either a permanent or temporary restriction on an entity wherein an entity is prohibited from utilizing the deposit facilitation system 100.

In the preceding detailed description, reference has been made to the accompanying drawings that form a part hereof, and in which are shown by way of illustration specific embodiments in which the invention may be practiced. These embodiments, and certain variants thereof, have been described in sufficient detail to enable those skilled in the art to practice the invention. It is to be understood that other suitable embodiments may be utilized and that logical changes may be made without departing from the spirit or scope of the invention. The description may omit certain information known to those skilled in the art. The preceding detailed description is, therefore, not intended to be limited to the specific forms set forth herein, but on the contrary, it is intended to cover such alternatives, modifications, and equivalents, as can be reasonably included within the spirit and scope of the appended claims.

## Claims

1. A deposit facilitation system that is operable to facilitate the collection and subsequent distribution of a deposit for a good or service between a first entity and a second entity comprising the steps of:
providing a user interface, wherein an operator of the deposit facilitation system provides a website or a software application that is configured to broker a transaction between a first entity and a second entity;
accessing the user interface, wherein the user interface is access by a first entity using a computing device;
registering the first entity, wherein the user interface will facilitate registration of the first entity if the first entity is not registered with the deposit facilitation system;
entering a transaction, wherein the first entity enters data regarding a transaction;
confirming the transaction, wherein the deposit facilitation system provides confirmation to the first entity of the transaction and details thereof;
collecting a deposit, wherein the operator of the deposit facilitation system collects a deposit for the transaction from the first entity;
notifying a second entity, wherein the deposit facilitation system sends notification to the second entity wherein the second entity is identified as being a party to the transaction;
confirming the transaction, wherein the second entity provides confirmation as being a party to the transaction;
delivering a good or service, wherein the second entity delivers the good or service of the transaction;
providing confirmation that the transaction is completed;
transferring the deposit, wherein the operator of the deposit facilitation system transfers the deposit to the second entity; and
collecting a fee, wherein the operator collects a fee for managing the transaction.

2. The deposit facilitation system as recited in claim 1, and further including the step of collecting transaction details, wherein the transaction details are collected and stored by the operator of the deposit facilitation system.

3. The deposit facilitation system as recited in claim 2, and further including the step of providing a settings interface, wherein the settings interface provides parameters to the first entity about an account thereof.

4. The deposit facilitation system as recited in claim 3, and further including the step of restricting an entity, wherein the operator can inhibit an entity from utilizing the deposit facilitation system.

5. The deposit facilitation system as recited in claim 4, and further including the step of reviewing the transaction details, wherein the operator reviews transaction details prior to transfer of the deposit to the second entity.

6. The deposit facilitation system as recited in claim 5, and further including the step of providing reports to the operator of the deposit facilitation system, wherein the operator is provided with transaction summary reports between all entities utilizing the deposit facilitation system.

7. The deposit facilitation system as recited in claim 6, wherein the fee collected is a flat rate fee.

8. A deposit facilitation system that is operable to facilitate the collection and subsequent distribution of a deposit for a good or service between a first entity and a second entity comprising the steps of:
providing a user interface, wherein an operator of the deposit facilitation system provides a website or a software application that is configured to broker a plurality of transactions intermediate a plurality of entities having registered accounts with the deposit facilitation system;
accessing the user interface, wherein the user interface is access by a first entity using a computing device;
entering transaction details, wherein the first entity enters data regarding a transaction, wherein the data will include identification of a second entity that is a party to the transaction;
confirming the transaction, wherein the deposit facilitation system provides confirmation to the first entity of the transaction details;
collecting a deposit, wherein the operator of the deposit facilitation system collects a deposit for the transaction from the first entity, wherein the deposit is collected utilizing a payment technique identified in an account of the first entity;
notifying the second entity, wherein the deposit facilitation system sends notification to the second entity, said notification being electronic;
receiving the notification, wherein the second entity receives the notification utilizing a computing device;
confirming the transaction, wherein the second entity provides confirmation as being a party to the transaction;
delivering a good or service, wherein the second entity delivers the good or service of the transaction;
providing confirmation that the transaction is completed, wherein the second entity transmits confirmation of completion of the transaction utilizing the deposit facilitation system to transmit a confirmation message;
reviewing the transaction, wherein the operator reviews the transaction details to ensure transaction completion;
transferring the deposit, wherein the operator of the deposit facilitation system transfers the deposit to the second entity; and
collecting a fee, wherein the operator collects a fee for managing the transaction.

9. The deposit facilitation system as recited in claim 8, and further including the step of resolving a disputed transaction, wherein the operator will remediate a disputed transaction between the first entity and the second entity.

10. The deposit facilitation system as recited in claim 9, and further including the step of banning an entity, wherein an entity is banned as a result of failing to comply with terms and conditions of the transaction.

11. The deposit facilitation system as recited in claim 10, and further including the step of providing a settings interface, wherein the settings interface provides parameters to entities registered with the deposit facilitation system and the parameters are account settings of the entities registered.

12. The deposit facilitation system as recited in claim 11, and further including the step of storing transaction details for the transaction between a first entity and a second entity.

13. The deposit facilitation system as recited in claim 12, and further including the step of providing a report of transactions for an entity, wherein an entity can obtain a report providing details regarding transactions of which the entity has been a party.

14. The deposit facilitation system as recited in claim 13, and further including the step of updating an account profile, wherein an entity registered with the deposit facilitation system accesses their account so as to update information associated therewith.

15. A deposit facilitation system that is operable to facilitate the collection and subsequent distribution of a deposit for a good or service between a first entity and a second entity comprising the steps of:
providing a user interface, wherein an operator of the deposit facilitation system provides a website or a software application that is configured to broker a transactions intermediate a plurality of entities having registered accounts with the deposit facilitation system;
registering a plurality of entities, wherein the deposit facilitation system receives and records data of the plurality of entities, wherein the data includes payment techniques;
accessing the user interface, wherein the user interface is access by a first entity using a computing device;
entering transaction details, wherein the first entity enters data regarding a transaction, wherein the data will include identification of a second entity that is a party to the transaction;
providing confirmation of the transaction, wherein the deposit facilitation system provides confirmation to the first entity of the transaction details;
reviewing the transaction details, wherein the first entity reviews the transaction details provided in the confirmation of the transaction;
collecting a deposit, wherein the operator of the deposit facilitation system collects a deposit for the transaction from the first entity, wherein the deposit is collected utilizing a payment technique identified in an account of the first entity;
notifying the second entity, wherein the deposit facilitation system sends notification to the second entity, said notification being electronic;
receiving the notification, wherein the second entity receives the notification utilizing a computing device;
confirming the transaction, wherein the second entity provides confirmation as being a party to the transaction;
delivering a good or service, wherein the second entity delivers the good or service of the transaction;
providing confirmation that the good or service governed by the transaction has been delivered, wherein the second entity transmits confirmation of completion of the transaction utilizing the deposit facilitation system to transmit a confirmation message, wherein the confirmation of the completion is delivered within the deposit facilitation system;
reviewing the transaction, wherein the operator reviews the transaction details to ensure transaction completion;
transferring the deposit, wherein the operator of the deposit facilitation system transfers the deposit to the second entity;
collecting a fee, wherein the operator collects a fee for managing the transaction; and
providing reports of the transaction intermediate the entities registered with the deposit facilitation system.

16. The deposit facilitation system as recited in claim 15, and further including the step of storing transaction details for the transaction between a first entity and a second entity wherein the stored transaction details are available to the operator, the first entity and the second entity.

17. The deposit facilitation system as recited in claim 16, and further including the step of resolving a disputed transaction, wherein the operator will remediate a disputed transaction between the first entity and the second entity.

18. The deposit facilitation system as recited in claim 17, and further including the step of banning an entity, wherein an entity is banned as a result of failing to comply with terms and conditions of the transaction.

19. The deposit facilitation system as recited in claim 18, and further including the step of reviewing banned entities, wherein the operator will review the banned entities and subsequently determine opportunity for reinstatement to utilize the deposit facilitation system.

20. The deposit facilitation system as recited in claim 19, and further including the step of providing a settings interface, wherein the settings interface provides parameters to the entities registered with the deposit facilitation system.
